# FASCICULE DE BREVET EUROPEEN

(11) **EP 3 524 879 B1**
(45) Date de publication et mention de la délivrance du brevet: **19.08.2020**
(21) Numéro de dépôt: 19155469.0
(22) Date de dépôt: 05.02.2019
(51) Int. Cl.: F21V 31/00, F21V 23/00, H02G 3/08

(54) **BLOC D'ÉCLAIRAGE DE SÉCURITÉ ÉTANCHE**
ABGEDICHTETER BEHÄLTER FÜR SICHERHEITSBELEUCHTUNG
SEALED SAFETY LIGHT BLOCK

(30) Priorité: 09.02.2018 FR 1851103
(43) Date de publication de la demande: 14.08.2019
(73) Titulaire: Cooper Securite SAS, 63200 Riom (FR)
(72) Inventeur: LACOUR, Frédéric, 63670 La Roche Blanche (FR); ZANIN, Julien, 63200 Riom (FR)
(74) Mandataire: Fédit-Loriot

(56) Documents cités:
- EP-A1- 2 866 322
- EP-A2- 1 156 568
- EP-A2- 2 568 214
- US-B1- 8 816 200

## Description

La présente invention concerne les blocs d'éclairage de sécurité c'est-à-dire des blocs d'éclairage destinés à afficher une signalétique lumineuse lors d'une défaillance du réseau d'alimentation principal, et qui fonctionnent alors grâce à des batteries d'accumulateurs.

Des blocs d'éclairage de sécurité connus comprennent un boîtier parallélépipédique, ouvert en face avant, comprenant une ou plusieurs sources lumineuses, un circuit de gestion électronique de celles-ci et, éventuellement, des accumulateurs. Un couvercle translucide est fixé au boîtier de façon à fermer la face avant du boîtier. Le couvercle est généralement recouvert d'un élément graphique de sécurité (par exemple une étiquette de signalisation) destiné à être éclairé par une source lumineuse du boîtier, émettant un flux lumineux par l'arrière du couvercle.

Le boîtier comprend généralement une ou plusieurs ouvertures d'entrée de câble, pratiquées dans sa paroi latérale et/ou dans sa paroi de fond, qui communiquent avec l'intérieur du boîtier, pour raccorder le bloc d'éclairage à des conducteurs électriques du réseau électrique local. Ces ouvertures d'entrée de câble prévues au niveau du boîtier interfèrent avec les exigences d'étanchéité requises par les normes internationales en vigueur pour ce type de matériel. En particulier, pour ce type de matériel, il est nécessaire de garantir l'étanchéité aux intrusions de corps solides et liquides, en respectant les indices de protection IP 65 ou IP 66 selon le standard international IP (« Ingress Protection »). Plus précisément, s'agissant de la protection contre la pénétration d'eau, les IP tels que définis ci-dessus requièrent une protection du bloc d'éclairage contre une projection d'eau à la lance et contre une projection, dite puissante, à la lance, avec un débit de l'ordre de 100 L/min. Comme indiqué plus haut, les ouvertures d'entrée de câble sont des points de faiblesse du produit à l'égard de ces exigences du standard. Aussi, afin d'atteindre le niveau de protection requis notamment par rapport aux intrusions de corps liquides, on utilise couramment des dispositifs de type presse-étoupes pour réaliser l'ancrage étanche d'une entrée de câble électrique au niveau des ouvertures d'entrée de câble prévues sur le boîtier du bloc d'éclairage. L'emploi de presse-étoupe rapporté sur le boîtier, s'il favorise l'étanchéité du boîtier, se fait toutefois au détriment de l'encombrement du bloc d'éclairage et, en particulier, au détriment de l'épaisseur de l'ensemble. L'engagement du conducteur électrique dans l'ouverture d'entrée de câble est par ailleurs rendu plus difficile à réaliser.

Dans un domaine connexe et plus général, qui est celui des boîtes pour appareillage électrique destinées à recevoir des câbles électriques, telles que des boîtes de dérivation de câbles ou des boîtes électriques à encastrer dans des cloisons sèches par exemple, on connaît l'emploi de boîte électrique comprenant une partie rigide pourvue localement d'une membrane souple transperçable, destinée à accueillir l'extrémité d'une gaine d'amenée de câbles électriques. Un tel agencement d'entrée de câble est connu par exemple des documents EP 1 501 164 ou DE 40 33 963. Grâce à la souplesse de ladite membrane, de telles boîtes électriques permettent de rapporter une extrémité de câbles électriques en autorisant un mouvement de pivotement du câble, tout en assurant au niveau de l'entrée de câble dans la boîte électrique une certaine étanchéité. Cependant, on parle plutôt ici d'étanchéité à l'air et/ou à la poussière et bien que la souplesse de la membrane puisse procurer une protection minimale contre les intrusions de corps liquide, un tel aménagement d'entrée de câble est insuffisant pour permettre d'atteindre les exigences d'étanchéité requises par les indices de protection IP 65 ou IP 66, en termes de protection contre des projections d'eau à la lance et, en particulier contre de telles projections d'eau puissantes. Le document EP 2 568 214 divulgue le préambule de la revendication 1.

Dans ce contexte, la présente invention a pour but de proposer un bloc d'éclairage de sécurité exempt des limitations précédemment évoquées et, en particulier, qui soit adapté pour lui conférer une épaisseur réduite et une étanchéité optimale.

A cette fin, l'invention concerne un bloc d'éclairage de sécurité comprenant un boîtier comportant une paroi délimitant intérieurement un logement d'accueil d'au moins une source lumineuse et d'un circuit de gestion électronique de ladite source lumineuse, ledit boîtier comportant au moins une première ouverture d'entrée de câble pratiquée dans la paroi dudit boîtier pour le passage d'un câble permettant de raccorder ladite source lumineuse à un réseau électrique local, caractérisé en ce que ladite première ouverture d'entrée de câble débouche dans un réceptacle situé à l'intérieur dudit boîtier, ledit réceptacle étant ouvert vers ledit logement d'accueil par une seconde ouverture d'entrée de câble qui est située au droit de ladite première ouverture d'entrée de câble, lesdites première et seconde ouvertures d'entrée de câble étant obturées respectivement par des première et seconde membranes sécables réalisées en matériau souple.

Suivant cet agencement, chaque entrée de câble du bloc d'éclairage de sécurité est constituée d'une première et d'une seconde membrane sécables en matériau souple disposées en regard l'une de l'autre, de part et d'autre d'un réceptacle disposé à l'intérieur du boîtier, respectivement côté paroi du boîtier et côté logement d'accueil du boîtier. La paroi recevant l'entrée de câble peut être une paroi latérale ou une paroi de fond du boîtier. Par membrane sécable, divisible ou défonçable, on entend une membrane munie d'au moins une portion sécable par enfoncement d'un câble à travers elle de façon à dégager une ouverture au travers de ladite membrane à la place de ladite portion. La première membrane traversée par un câble est adaptée pour casser un jet d'eau tel que prévu par les tests de spécification pour satisfaire aux indices de protection IP X5 et IP X6, tandis que la deuxième membrane est adaptée pour entourer le câble la traversant en assurant l'étanchéité à l'eau. Le bloc d'éclairage de sécurité selon l'invention satisfait dès lors les normes d'étanchéité en vigueur et en particuliers celles requises par les indices de protection IP 65 ou IP 66, selon lesquels les projections d'eau à la lance, même puissantes, ne doivent pas avoir d'effet nuisible sur le bloc d'éclairage, ce qui est le cas grâce à la double membrane en matériau souple constituant chaque entrée de câble du bloc. En outre, cet agencement d'entrée de câble à double membrane en matériau souple permet d'éviter l'utilisation de presse-étoupe pour assurer la fonction d'étanchéité au niveau de l'entrée de câble du bloc, ce qui est particulièrement avantageux en termes d'encombrement global. On peut ainsi proposer un bloc particulièrement fin.

D'autres caractéristiques non limitatives et avantageuses du bloc d'éclairage sont définies comme suit :
- lesdites première et seconde ouvertures d'entrée de câble s'étendent suivant deux plans respectifs, non parallèles ;
- ladite première membrane sécable en matériau souple comporte une première plage centrale circulaire ou oblongue, reliée à une deuxième plage annulaire périphérique, par un bourrelet annulaire, tandis qu'un bourrelet périphérique est fixé rigidement à une surface intérieure de ladite première ouverture d'entrée de câble ;

- ladite seconde membrane sécable en matériau souple comprend au moins une partie conformée en accordéon, s'étendant du centre vers sa périphérie,
- ladite seconde membrane sécable en matériau souple comprend au moins une partie étagée en une pluralité d'anneaux concentriques formant une zone en forme d'entonnoir orienté vers l'intérieur du boîtier ;
- ledit réceptacle est issu de moulage d'une seule pièce avec ledit boîtier ;
- ledit boîtier comportant une paroi de fond à rapporter contre une paroi murale, ledit réceptacle s'étend à partir de la paroi de fond, à l'intérieur dudit boîtier isolant, le fond dudit réceptacle étant ouvert vers l'extérieur.
- les première et seconde membranes sécables réalisées en matériau souple font partie d'un agencement en matériau souple intégré audit boîtier, venu d'une pièce avec lesdites première et seconde membranes, ledit agencement comprenant au moins une lèvre d'étanchéité périphérique formée sur un bord libre de la paroi latérale du boîtier.
- ledit agencement en matériau souple comprend des inserts adaptés pour obturer des ouvertures allongées pratiquées dans une paroi de fond dudit boîtier destinées au passage de vis de fixation du boîtier à une paroi murale, lesdits inserts en matériau souple étant adaptés pour procurer un maintien desdites vis lors du montage.
- ledit agencement en matériau souple comprend des éléments d'amortissement destinés à être interposés entre une paroi de fond du boîtier et une paroi murale, lesdits éléments d'amortissement étant disposés dans des ouvertures pratiquées aux quatre coins de la paroi de fond du boîtier ;
- le matériau souple est un matériau élastomère ;
- le matériau souple est comoulé ou surmoulé en même temps qu'une partie rigide du boîtier, de sorte à former avec la partie rigide dudit boîtier une pièce monobloc.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective de la partie en matériau rigide du boîtier d'un bloc d'éclairage selon l'invention ;
- la Figure 2 est une vue schématique en perspective du boîtier de la figure 1 auquel est intégré l'agencement en matériau souple selon l'invention ;
- la Figure 3 est une vue schématique de détail de la première membrane souple de l'agencement d'entrée de câble du bloc d'éclairage selon l'invention;
- la Figure 4 st une vue schématique de détail de la seconde membrane souple de l'agencement d'entrée de câble du bloc d'éclairage selon l'invention.

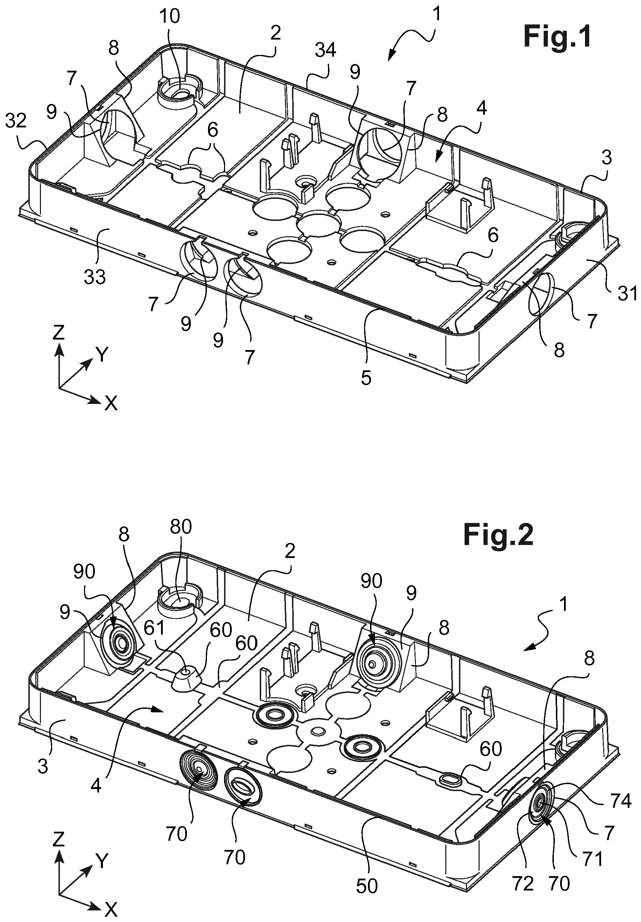

Sur la Figure 1, on a représenté schématiquement un boîtier creux 1 d'un bloc d'éclairage de sécurité destiné à être rapporté en saillie sur une paroi murale par exemple. Le boîtier 1 présente globalement une forme de parallélépipède allongé. Il s'étend ainsi en longueur selon un axe longitudinal X, en largeur selon un axe transversal Y et en épaisseur selon un axe frontal Z. En position d'utilisation, le boîtier 1 est rapporté sur la paroi murale de telle sorte que son axe longitudinal X s'étende horizontalement à la paroi murale, que son axe transversal Y s'étende verticalement et que son axe frontal Z s'étend perpendiculairement à la paroi murale. Le boîtier 1 comprend plus précisément une paroi de fond 2, de forme rectangulaire, bordée par une paroi latérale 3 s'élevant à partir de la paroi de fond 2 et s'étendant selon un contour rectangulaire. La paroi latérale délimite intérieurement un logement d'accueil 4 pour un mécanisme d'appareillage électrique du bloc (non représenté), comprenant typiquement une ou plusieurs sources lumineuses et un circuit électronique de gestion de la ou des sources lumineuses, ainsi qu'éventuellement des accumulateurs. A l'opposé de la paroi de fond 2 du boîtier, soit au niveau d'une face avant du boîtier, la paroi latérale 3 comprend un bord libre qui délimite une ouverture rectangulaire 5, permettant l'introduction du mécanisme d'appareillage électrique dans le boîtier. Le boîtier 1 est préférentiellement réalisé d'une seule pièce par moulage d'un matériau plastique rigide, tel que le polycarbonate.

Un couvercle (non représenté) présentant une paroi frontale translucide ou transparente est destiné à venir fermer la face avant du boîtier 1. La paroi frontale du couvercle peut en outre être revêtue d'une ou plusieurs étiquettes de sécurité, illustrant l'information de sécurité désirée, telle que par exemple la présence d'une sortie de secours.

Le boîtier 1 est équipé de moyens de fixation à la paroi murale sur laquelle le boîtier 1 est destiné à être rapporté. Ces moyens de fixation comprennent une pluralité d'ouvertures allongées 6, pratiquées dans la paroi de fond 2 du boîtier 1, destinées au passage de vis de fixation devant être vissées dans des trous de perçage réalisés dans la paroi murale. Pour former un appui rigide pour les têtes de ces vis de fixation, les ouvertures allongées 6 présentent une partie oblongue de largeur comprise entre le diamètre des têtes de vis et celui des corps filetés des vis de fixation. Selon l'exemple de réalisation, les ouvertures allongées 6 sont au nombre de trois et sont disposées selon deux orientations différentes pour faciliter la mise en place des vis en regard des trous de perçage.

Pour l'alimentation du mécanisme d'appareillage électrique en courant électrique, le boîtier 1 présente au moins une première ouverture d'entrée de câble 7 pratiquée préférentiellement dans sa paroi latérale 3, afin de permettre l'engagement de l'extrémité libre d'une gaine d'amenée de câbles dans le logement d'accueil, par le côté du boîtier 1. Cette première ouverture d'entrée de câble présente ici une forme circulaire. En variante, on pourrait prévoir que l'ouverture d'entrée de câble présente une forme autre, adaptée à la forme de l'extrémité de la gaine. Selon l'exemple de réalisation, le boîtier 1 comporte une pluralité de premières ouvertures d'entrées de câble 7 réparties sur le pourtour du boîtier. Ici, comme illustré sur la figure 1, les deux faces transversales 31 et 32 de la paroi latérale 3 présentent chacune une première ouverture d'entrée de câble 7, pour permettre la connexion avec une gaine de câbles électriques courant horizontalement le long de la paroi murale et les deux faces longitudinales 33 et 34 de la paroi latérale 3 présentent chacune respectivement deux premières ouvertures d'entrée de câble 7 et une première ouverture d'entrée de câble 7, pour permettre la connexion avec une gaine de câbles électriques courant verticalement le long de la paroi murale.

Chaque première ouverture d'entrée de câble 7 dont est pourvue la paroi latérale 7 du boîtier 1, est prévue pour communiquer avec le logement d'accueil 4 à l'intérieur du boîtier 1. Cependant, conformément à l'invention, la première ouverture d'entrée de câble 7 ne communique pas directement avec le logement d'accueil 4 à l'intérieur du boîtier 1, mais débouche dans un réceptacle 8, formant un logement intermédiaire interne au boîtier, venu de moulage d'une seule pièce avec le boîtier à partir du même matériau plastique rigide que celui dans lequel est réalisé le boîtier. Plus précisément, le réceptacle 8 s'étend vers l'intérieur du boîtier 1 devant chaque première ouverture d'entrée de câble 7, de façon à la recouvrir, entre une face interne de la paroi latérale 3 du boîtier 1 et la paroi de fond 2 du boîtier 1. Le réceptacle 8 est en outre ouvert vers le logement d'accueil 4 à l'intérieur du boîtier 1 par une seconde ouverture d'entrée de câble 9, qui est située au droit de la première ouverture d'entrée de câble 7, à une certaine distance de celle-ci. Cette seconde ouverture d'entrée de câble 9 présente également ici une forme circulaire, mais en variante, comme pour la première ouverture d'entrée de câble 7, pourrait présenter une forme autre. Par ailleurs, on prévoit que les première et seconde ouvertures d'entrée de câble 7 et 9, situées de part et d'autre du réceptacle 8, s'étendent dans des plans respectifs non parallèles, afin de permettre le démoulage. Préférentiellement, les deux plans dans lesquels s'étendent respectivement les première et seconde ouvertures d'entrée de câble 7 et 9, forment entre eux un angle compris entre 5° et 35°.

Ainsi, le réceptacle 8 forme un sas d'accès au logement d'accueil 3 à l'intérieur du boîtier 1, dont l'entrée, côté extérieur du boîtier 1, est constituée par la première ouverture d'entrée de câble 7 et la sortie, côté intérieur du boîtier 1, est constituée par la seconde ouverture d'entrée de câble 9.

Conformément à l'invention, et comme illustré à la figure 2, les première et seconde ouvertures d'entrée de câble 7 et 9, situées de part et d'autre du réceptacle 8, sont obturées par des première et seconde membranes sécables 70 et 90, réalisées en matériau souple. Le matériau utilisé pour mouler les membranes souples 70 et 90 est avantageusement un matériau élastomère tel qu'un caoutchouc ou un styrène éthylène butylène styrène (SEBS). Préférentiellement, les membranes souple 70 et 90 sont comoulées ou surmoulées en même temps que la partie rigide du boîtier et forment avec la partie rigide une pièce monobloc. Le réceptacle 8 délimite ainsi un logement interne au boîtier 1, fermé vers l'intérieur du boîtier 1, entre les deux membranes souples obturant les première et seconde ouvertures d'entrée de câble. A noter que le fond du réceptacle 8 est par contre ouvert vers l'extérieur, de façon à permettre d'évacuer de l'eau s'infiltrant dans le réceptacle 8 entre la première et la seconde ouverture d'entrée de câble.

Chacune des deux membranes souples obturant les première et seconde ouvertures d'entrée de câble remplit une fonction particulière en vue de satisfaire aux critères d'étanchéité requis par les indices de protection IP X5 ou IP X6. Ainsi, la première membrane souple 70 est adaptée pour casser un jet d'eau tel qu'il est prévu par les tests de spécification relatifs aux indices de protection IP X5 et IP X6 (soit un jet de 100 L/min), tandis que la deuxième membrane souple 90 est adaptée pour empêcher l'entrée d'eau dans le logement d'accueil du boîtier.

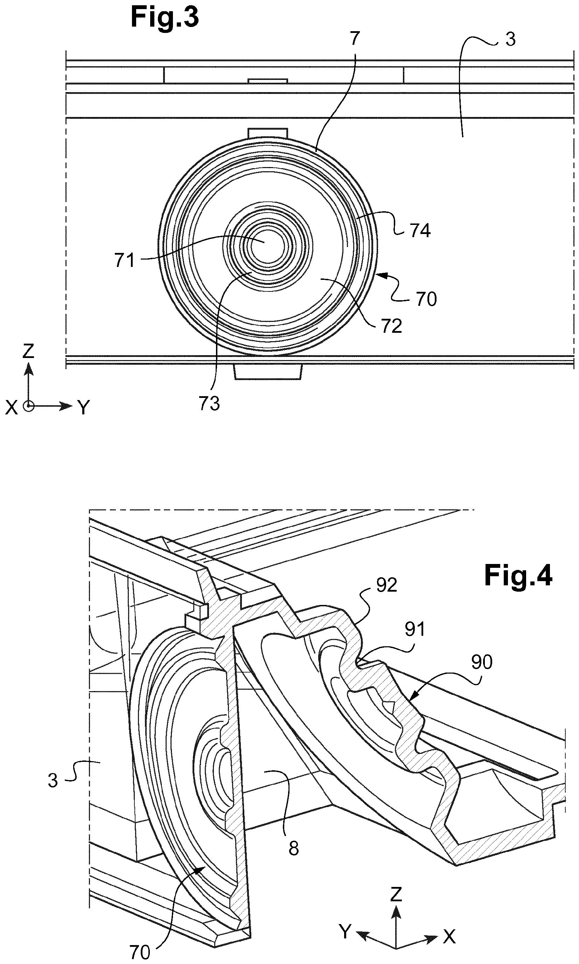

Comme l'illustre la vue de détail de la figure 3, selon un exemple de réalisation, la première membrane souple 70 comporte préférentiellement une première plage centrale circulaire ou oblongue 71, de faible épaisseur, par exemple de l'ordre de 0,6 mm, entourée d'une deuxième plage annulaire périphérique 72, de même faible épaisseur, ces deux plages étant reliées par un bourrelet annulaire 73, de plus grande épaisseur, par exemple de l'ordre de 1,2 mm. La première membrane souple 70 comporte également à sa périphérie un bourrelet périphérique 74 fixé rigidement à une surface intérieure de la première ouverture d'entrée de câble 7, de même plus grande épaisseur que le bourrelet annulaire 73. Ainsi, chaque plage de faible épaisseur de la première membrane souple 70 peut correspondre à un diamètre donné d'une gaine d'amenée de câbles électriques et constitue une zone de faiblesse pouvant être aisément transpercée par l'extrémité de la gaine poussée au travers de la première membrane souple 70, lors de l'introduction de la gaine dans le boîtier 1, tandis que les bourrelets de plus grande épaisseur permettent d'empêcher la déchirure de la première membrane souple en direction de sa périphérie au passage de la gaine. Autrement dit, la première membrane souple est adaptée pour être sécable, tout en étant prémunie contre les déchirures.

Ainsi, au passage de la gaine à travers elle, la première membrane souple 70 vient entourer la gaine et s'étend radialement depuis la surface externe de la gaine jusqu'à la surface intérieure de la première ouverture d'entrée de câble 7, de façon à constituer un obstacle permettant de casser un jet d'eau selon les tests IP X5 et IP X6.

La seconde membrane souple 90 obturant la deuxième ouverture d'entrée de câble 9 vise quant à elle à assurer l'étanchéité vis-à-vis de projections d'eau s'infiltrant dans le réceptacle 8 entre la première et la seconde ouverture d'entrée de câble. La seconde membrane souple 90 est ainsi conformée de sorte que, lors du passage de l'extrémité de gaine à travers elle, elle puisse s'étendre au maximum le long de la surface externe de la gaine, de manière à venir enserrer la gaine. Comme l'illustre la vue de détail de la figure 4, selon un exemple de réalisation, la seconde membrane souple 90 comprend préférentiellement une partie conformée en accordéon ou comportant des pliures, se présentant sous la forme d'une succession de creux 91 et de bourrelets 92, s'étendant du centre vers sa périphérie, de manière à lui permettre de se déplier le plus possible autour du câble la traversant. Des zones d'épaisseur amoindrie peuvent être prévues le long des pliures de façon constituer des zones de liaisons à faible résistance favorisant le passage de la gaine à travers elle, en s'adaptant à différents diamètres de gaine. En variante, la seconde membrane souple 90 peut être étagée en une pluralité d'anneaux concentriques formant une zone en forme d'entonnoir orienté vers l'intérieur du boîtier, ces anneaux étant liés entre eux par des zones de plus faible épaisseur formant des liaisons à faible résistance.

Selon un mode de réalisation préféré, en référence à la figure 2, les première et seconde membranes souples 70 et 90 font partie d'un agencement en matériau souple intégré au boîtier, venu d'une pièce avec elles, et destiné à remplir des fonctions complémentaires. Cet agencement en matériau souple est donc réalisé au cours de la même opération de moulage que les membranes souples 70, 90, avec le même matériau élastomère, type caoutchouc ou SEBS. En particulier, cet agencement en matériau souple comprend une lèvre d'étanchéité périphérique 50 formée sur le bord libre de la paroi latérale 3 du boîtier 1, destinée à procurer l'étanchéité avec le couvercle rapporté sur le boîtier.

En outre, comme illustré à la figure 2, l'agencement en matériau souple peut également comprendre des inserts 60, destinées à obturer les ouvertures allongées 6 pratiquées sur la paroi de fond 2 du boîtier 1. Ces inserts 60 en matériau souple sont préférentiellement percés d'une ouverture 61, destinées à recevoir un corps de vis, pour faciliter le montage en procurant un maintien de la vis lors du montage du boîtier sur la paroi murale.

L'agencement en matériau souple peut encore comprendre des éléments d'amortissement 80 destinés à être interposés entre la paroi de fond 2 du boîtier et la paroi murale à laquelle il est fixé. Ces éléments d'amortissement 80 sont disposés dans des ouvertures 10 pratiquées aux quatre coins de la paroi de fond 2 du boîtier 1. Les éléments d'amortissement permettent ainsi d'absorber les vibrations éventuellement subies par le bloc au cours de son fonctionnement, ce qui participe à préserver l'intégrité du bloc.

## Revendications

1. Bloc d'éclairage de sécurité comprenant un boîtier (1) comportant une paroi (3) délimitant intérieurement un logement d'accueil (4) d'au moins une source lumineuse et d'un circuit de gestion électronique de ladite source lumineuse, ledit boîtier (1) comportant au moins une première ouverture d'entrée de câble (7) pratiquée dans la paroi (3) dudit boîtier pour le passage d'un câble permettant de raccorder ladite source lumineuse à un réseau électrique local, **caractérisé en ce que** ladite première ouverture d'entrée de câble (7) débouche dans un réceptacle (8) situé à l'intérieur dudit boîtier, ledit réceptacle (8) étant ouvert vers ledit logement d'accueil (4) par une seconde ouverture d'entrée de câble (9) qui est située au droit de ladite première ouverture d'entrée de câble (7), lesdites première et seconde ouvertures d'entrée de câble étant obturées respectivement par des première et seconde membranes sécables réalisées en matériau souple (70, 90).

2. Bloc d'éclairage de sécurité selon la revendication 1, **caractérisé en ce que** lesdites première et seconde ouvertures d'entrée de câble (7, 9) s'étendent suivant deux plans respectifs, non parallèles.

3. Bloc d'éclairage de sécurité selon l'une quelconque des revendications précédentes, **caractérisé en ce que** ladite première membrane sécable en matériau souple (70)comporte une première plage centrale circulaire ou oblongue (71), reliée à une deuxième plage annulaire périphérique (72), par un bourrelet annulaire (73), tandis qu'un bourrelet périphérique (74) est fixé rigidement à une surface intérieure de ladite première ouverture d'entrée de câble (7).

4. Bloc d'éclairage de sécurité selon l'une quelconque des revendications précédentes, **caractérisé en ce que** ladite seconde membrane sécable (90) en matériau souple comprend au moins une partie conformée en accordéon, s'étendant du centre vers sa périphérie.

5. Bloc d'éclairage de sécurité selon l'une quelconque des revendications précédentes, **caractérisé en ce que** ladite seconde membrane sécable (90) en matériau souple comprend au moins une partie étagée en une pluralité d'anneaux concentriques formant une zone en forme d'entonnoir orienté vers l'intérieur du boîtier.

6. Bloc d'éclairage de sécurité selon l'une quelconque des revendications précédentes, **caractérisé en ce que** ledit réceptacle est issu de moulage d'une seule pièce avec ledit boîtier.

7. Bloc d'éclairage de sécurité selon l'une quelconque des revendications précédentes, **caractérisé en ce que**, ledit boîtier (1) comportant une paroi de fond (2) à rapporter contre une paroi murale, ledit réceptacle (8) s'étend à partir de ladite paroi de fond, à l'intérieur dudit boîtier isolant, le fond dudit réceptacle étant ouvert vers l'extérieur.

8. Bloc d'éclairage de sécurité selon l'une quelconque des revendications précédentes, **caractérisé en ce que** les première et seconde membranes sécables réalisées en matériau souple (70, 90) font partie d'un agencement en matériau souple intégré audit boîtier, venu d'une pièce avec lesdites première et seconde membranes, ledit agencement comprenant au moins une lèvre d'étanchéité périphérique (50) formée sur un bord libre de la paroi latérale (3) du boîtier.

9. Bloc d'éclairage de sécurité selon la revendication 8, **caractérisé en ce que** ledit agencement en matériau souple comprend des inserts (60) adaptés pour obturer des ouvertures allongées (6) pratiquées dans une paroi de fond (2) dudit boîtier destinées au passage de vis de fixation du boîtier à une paroi murale, lesdits inserts (60) en matériau souple étant adaptés pour procurer un maintien desdites vis lors du montage.

10. Bloc d'éclairage de sécurité selon la revendication 8 ou 9, **caractérisé en ce que** ledit agencement en matériau souple comprend des éléments d'amortissement (80) destinés à être interposés entre une paroi de fond (2) du boîtier (1) et une paroi murale, lesdits éléments d'amortissement (80) en matériau souple étant disposés dans des ouvertures (10) pratiquées aux quatre coins de la paroi de fond (2) du boîtier.

11. Bloc d'éclairage de sécurité selon l'une quelconque des revendications précédentes, **caractérisé en ce que** le matériau souple est un matériau élastomère.

12. Bloc d'éclairage de sécurité selon l'une quelconque des revendications précédentes, **caractérisé en ce que** le matériau souple est comoulé ou surmoulé en même temps qu'une partie rigide du boîtier, de sorte à former avec la partie rigide dudit boîtier une pièce monobloc.

## Patentansprüche

1. Sicherheitsbeleuchtungsblock, umfassend ein Gehäuse (1), das eine Wand (3) umfasst, die im Innern einen Aufnahmeraum (4) mindestens einer Lichtquelle und einer Schaltung zur elektronischen Steuerung der Lichtquelle abgrenzt, wobei das Gehäuse (1) mindestens eine erste Kabeleintrittsöffnung (7) umfasst, die für den Durchgang eines Kabels, das es ermöglicht, die Lichtquelle an ein lokales Stromnetz anzuschließen, in der Wand (3) des Gehäuses ausgebildet ist, **dadurch gekennzeichnet, dass** die erste Kabeleintrittsöffnung (7) in einem Behälter (8) mündet, der sich im Innern des Gehäuses befindet, wobei der Behälter (8) mittels einer zweiten Kabeleintrittsöffnung (9), die sich auf Höhe der ersten Kabeleintrittsöffnung (7) befindet, in Richtung des Aufnahmeraums (4) geöffnet ist, wobei die erste und zweite Kabeleintrittsöffnung jeweils von einer ersten und zweiten durchtrennbaren Membran verschlossen werden, die aus weichem Material ausgeführt sind (70, 90).

2. Sicherheitsbeleuchtungsblock nach Anspruch 1, **dadurch gekennzeichnet, dass** die erste und zweite Kabeleintrittsöffnung (7, 9) sich in zwei jeweiligen Ebenen erstrecken, die nicht parallel sind.

3. Sicherheitsbeleuchtungsblock nach einem der vorhergehenden Ansprüche, **dadurch gekennzeichnet, dass** die erste durchtrennbare Membran aus weichem Material (70) einen ersten kreisförmigen oder länglichen mittleren Bereich (71) umfasst, der mittels einer ringförmigen Wulst (73) mit einem zweiten ringförmigen Umfangsbereich (72) verbunden ist, während eine Umfangswulst (74) starr an einer Innenfläche der ersten Kabeleintrittsöffnung (7) befestigt ist.

4. Sicherheitsbeleuchtungsblock nach einem der vorhergehenden Ansprüche, **dadurch gekennzeichnet, dass** die zweite durchtrennbare Membran (90) aus weichem Material mindestens einen Abschnitt umfasst, der akkordeonförmig ist, der sich von der Mitte zu ihrem Umfang erstreckt.

5. Sicherheitsbeleuchtungsblock nach einem der vorhergehenden Ansprüche, **dadurch gekennzeichnet, dass** die zweite durchtrennbare Membran (90) aus weichem Material mindestens einen stufenförmigen Abschnitt aus einer Vielzahl konzentrischer Ringe umfasst, der eine trichterförmige Zone bildet, die dem Innern des Gehäuses zugewandt ist.

6. Sicherheitsbeleuchtungsblock nach einem der vorhergehenden Ansprüche, **dadurch gekennzeichnet, dass** der Behälter einstückig mit dem Gehäuse geformt ist.

7. Sicherheitsbeleuchtungsblock nach einem der vorhergehenden Ansprüche, **dadurch gekennzeichnet, dass** das Gehäuse (1) eine Bodenwand (2) umfasst, die an einer Wand angebracht wird, wobei der Behälter (8) sich von der Bodenwand im Innern des isolierenden Gehäuses erstreckt, wobei der Boden des Behälters nach außen offen ist.

8. Sicherheitsbeleuchtungsblock nach einem der vorhergehenden Ansprüche, **dadurch gekennzeichnet, dass** die erste und zweite durchtrennbare Membran, die aus weichem Material ausgeführt sind (70, 90), Teil einer Anordnung aus weichem Material sind, die in dem Gehäuse integriert ist, die einstückig mit der ersten und zweiten Membran ist, wobei die Anordnung mindestens eine Umfangsdichtlippe (50) umfasst, die an einem freien Rand der Seitenwand (3) des Gehäuses gebildet ist.

9. Sicherheitsbeleuchtungsblock nach Anspruch 8, **dadurch gekennzeichnet, dass** die Anordnung aus weichem Material Einsätze (60) umfasst, die zum Verschließen von länglichen Öffnungen (6) angepasst sind, die in einer Bodenwand (2) des Gehäuses ausgebildet sind, die für den Durchgang von Befestigungsschrauben des Gehäuses an einer Wand bestimmt sind, wobei die Einsätze (60) aus weichem Material angepasst sind, während der Montage einen Halt der Schrauben bereitzustellen.

10. Sicherheitsbeleuchtungsblock nach Anspruch 8 oder 9, **dadurch gekennzeichnet, dass** die Anordnung aus weichem Material Dämpfungselemente (80) umfasst, die dazu bestimmt sind, zwischen eine Bodenwand (2) des Gehäuses (1) und eine Wand gesetzt zu werden, wobei die Dämpfungselemente (80) aus weichem Material in Öffnungen (10) angeordnet sind, die an den vier Ecken der Bodenwand (2) des Gehäuses ausgebildet sind.

11. Sicherheitsbeleuchtungsblock nach einem der vorhergehenden Ansprüche, **dadurch gekennzeichnet, dass** das weiche Material ein Elastomermaterial ist.

12. Sicherheitsbeleuchtungsblock nach einem der vorhergehenden Ansprüche, **dadurch gekennzeichnet, dass** das weiche Material gleichzeitig mit einem starren Abschnitt des Gehäuses derart co-geformt oder aufgeformt wird, dass es mit dem starren Abschnitt des Gehäuses einen einstückigen Teil bildet.

## Claims

1. An emergency lighting block comprising a case (1) including a wall (3) internally delimiting an accommodating housing (4) for at least one light source and an electronic driving circuit for said light source, said case (1) including at least a first cable inlet opening (7) provided in the wall (3) of said case for the passage of a cable allowing to connect said light source to a local electrical supply network, **characterized in that** said first cable inlet opening (7) opens into a receptacle (8) located within said case, said receptacle (8) being opened towards said accommodating housing (4) with a second cable inlet opening (9) that is located facing to said first cable inlet opening (7), said first and second cable inlet openings being sealed by first and second breakable membranes made of flexible material (70, 90), respectively.

2. The emergency lighting block according to claim 1, **characterized in that** said first and second cable inlet openings (7, 9) extend along two respective non-parallel plans.

3. The emergency lighting block according to any of the preceding claims, **characterized in that** said first breakable membrane (70) made of flexible material includes a first circular or oblong central area (71), connected to a second peripheral annular area (72), by an annular pad (73), while a peripheral pad (74) is rigidly fixed to an internal surface of said first cable inlet opening (7).

4. The emergency lighting block according to any of the preceding claims, **characterized in that** said second breakable membrane (90) made of flexible material comprises at least a part shaped in accordion-like, extending from the center towards its periphery.

5. The emergency lighting block according to any of the preceding claims, **characterized in that** said second breakable membrane (90) made of flexible material comprises at least a staged part in a plurality of concentric rings forming a funnel-like area directed inwards from the case.

6. The emergency lighting block according to any of the preceding claims, **characterized in that** said receptacle results from an unitary molding with said case.

7. The emergency lighting block according to any of the preceding claims, **characterized in that**, said case (1) including a bottom wall (2) to be connected against a mural wall, said receptacle (8) extends from said bottom wall, within said insulating case, the bottom of said receptacle being opened towards the outside.

8. The emergency lighting block according to any of the preceding claims, **characterized in that** the first and second breakable membranes (70, 90) made of flexible material belong to a flexible material arrangement integrated to said case, made as a single part with said first and second membranes, said arrangement comprising at least a peripheral sealing lip (50) formed on a free edge of the side wall (3) of the case.

9. The emergency lighting block according to claim 8, **characterized in that** said flexible material arrangement comprises inserts (60) adapted to seal lengthened openings (6) provided in a bottom wall (2) of said case intended to allow the passage of fastening screw from the case to a mural wall, said inserts (60) made of flexible material being adapted to provide holding for said screws during the mounting.

10. The emergency lighting block according to claim 8 or 9, **characterized in that** said flexible material arrangement comprises damping elements (80) intended to be interposed between a bottom wall (2) of the case (1) and a mural wall, said damping elements (80) made of flexible material being laid out into openings (10) provided on the four corners of the bottom wall (2) of the case.

11. The emergency lighting block according to any of the preceding claims, **characterized in that** the flexible material is an elastomer material.

12. The emergency lighting block according to any of the preceding claims, **characterized in that** the flexible material is co-molded or over-molded at the same time as a rigid part of the case, in order to form with the rigid part of said case an unitary part.
